# FASCICULE DE BREVET EUROPEEN

(11) **EP 0 812 674 B1**
(45) Date de publication et mention de la délivrance du brevet: **25.07.2001**
(21) Numéro de dépôt: 97401348.4
(22) Date de dépôt: 13.06.1997
(51) Int. Cl.: B29C 70/46, B29C 70/48, B29C 45/14

(54) **Procédé pour réaliser une pièce en matière thermoplastique renforcée, poutre de pare-chocs et pare-chocs comprenant une telle poutre**
Ein Herstellungsverfahren eines Gegenstandes aus faserverstärktem thermoplastischem Kunststoff, ein Stossstangenträger und eine mit diesem Träger ausgerüstete Stossstange
A process for manufacturing an article made of reinforced thermoplastics, a bumper beam and a bumper incorporating such a beam

(30) Priorité: 13.06.1996 FR 9607360
(43) Date de publication de la demande: 17.12.1997
(73) Titulaire: COMPAGNIE PLASTIC OMNIUM, 69007 Lyon (FR)
(72) Inventeur: Uytterhaeghe, Luc, 01100 Arbent (FR); Duboin, François, 52200 Langres (FR); Roussel, Thierry, 52500 Montesson (FR); Matos, Emmanuel, 52200 Langres (FR)
(74) Mandataire: Leszczynski, André

(56) Documents cités:
- EP-A- 0 241 359
- EP-A- 0 255 314
- EP-A- 0 266 742
- EP-A- 0 332 899
- EP-A- 0 547 625
- WO-A-85/00141
- US-A- 5 089 206

## Description

La présente invention concerne un procédé pour réaliser une pièce en matière thermoplastique renforcée, une poutre de pare-chocs et un pare-chocs comprenant une telle poutre.

On sait que sur une poutre de pare-chocs, il est nécessaire de prévoir des éléments d'accrochage, d'une part, pour relier la poutre au bouclier du pare-chocs, et d'autre part, pour relier la poutre au châssis du véhicule.

Lorsque la poutre est en aluminium, il faut rapporter ces éléments d'accrochage.

On a déjà proposé de réaliser une poutre de pare-chocs en matière thermoplastique éventuellement chargée de fibres de renfort, ce qui permet non seulement d'alléger la poutre mais également de mouler les éléments d'accrochage d'un seul tenant avec la poutre, d'où une économie de montage et de fabrication des éléments d'accrochage.

Mais en dépit des nervures qu'elles peuvent comporter, ces poutres en matière thermoplastique présentent l'inconvénient d'être insuffisamment rigides.

Pour résoudre ce problème de rigidité, on a imaginé de réaliser une poutre de pare-chocs en matière thermoplastique chargée combinée à une ou plusieurs feuilles de renfort constituées par un tissé ou un non-tissé de fibres de renfort, notamment en verre, mélangées à de la matière thermoplastique, ladite matière thermoplastique étant présente sous la forme de fibres de matière thermoplastique comme dans le matériau vendu sous la dénomination "Twintex" par la société VETROTEX ou présente sous la forme d'une imprégnation des fibres de renfort, comme dans les matériaux de la famille des thermoplastiques renforcés estampables (TRE).

La feuille de renfort est chauffée puis placée dans un moule où elle est surmoulée par la matière thermoplastique.

Elle épouse alors la forme du moule et apparaît, après démoulage, sur une des faces de la poutre.

La présence de la feuille de renfort est très intéressante car elle confère à la poutre une grande rigidité.

Cependant, cette feuille de renfort occupe toute une face de la poutre.

Or, malgré sa relative viscosité à chaud, la feuille de renfort ne dispose que d'une déformabilité limitée, ce qui l'empêche de pénétrer dans des nervures ou dans des cavités étroites et profondes du moule du type de celles permettant de réaliser des éléments d'accrochage.

On a donc renoncé à réaliser par moulage des nervures ou des éléments d'accrochage sur la face de la poutre occupée par la feuille de renfort.

Si l'absence de nervure sur cette face peut être compensée avec plus ou moins de succès par une structure légèrement modifiée de la poutre, l'absence d'éléments d'accrochage moulés avec la poutre oblige en revanche à revenir à un système d'accrochage traditionnel dans lequel on rapporte des éléments d'accrochage sur la poutre.

Une alternative à cette solution coûteuse est fournie par le document EP-0 547 625-A, qui décrit une poutre dont toute l'épaisseur est occupée par une feuille de renfort.

Cette poutre est réalisée par injection, la matière fondue étant injectée par des canaux débouchant dans chacune des cavités du moule définissant les nervures.

Dans ce cas, la matière plastique injectée remplit lesdites cavités pour former les nervures et se soude à la matière plastique de la feuille de renfort, laquelle constitue en elle-même la majeure partie de la poutre.

Ce procédé ne conviendrait pas à une feuille de renfort trop fine pour occuper toute l'épaisseur de la poutre, sauf à repousser ladite feuille de renfort sur la face de la poutre opposée aux nervures, ce qui limiterait très sensiblement l'effet produit par la feuille de renfort sur la tenue mécanique de la poutre.

Le problème subsiste donc de réaliser une poutre comportant une feuille de renfort localisée sur sa face munie de nervures.

La présente invention vise à résoudre ce problème en proposant un procédé de moulage qui permet de réaliser des nervures ou des éléments d'accrochage en saillie de la face de la poutre occupée par la feuille de renfort.

La présente invention a pour objet un procédé pour réaliser une pièce en matière thermoplastique renforcée par une feuille de renfort apparaissant sur l'une des faces de ladite pièce, consistant à:
- utiliser un moule comprenant une cavité principale qui définit la forme générale de la pièce et des cavités secondaires débouchant dans une paroi de la cavité principale et définissant des excroissances en saillie d'une des faces de la pièce,
- déposer dans le moule ouvert une feuille de renfort constituée par un tissé ou un non tissé de fibres de renfort mélangées à de la matière thermoplastique, contre ladite paroi de la cavité principale, la feuille de renfort obturant ainsi l'embouchure des cavités secondaires,
- introduire dans le moule ouvert une matière thermoplastique éventuellement chargée de fibres dans la cavité principale du moule, du côté de la feuille de renfort opposé aux cavités secondaires, en quantité suffisante pour remplir la cavité principale et les cavités secondaires,
- fermer progressivement le moule pour provoquer le fluage de la matière thermoplastique et le remplissage de la cavité principale et des cavités secondaires,
- démouler la pièce.

La présente invention a également pour objet un procédé pour réaliser une poutre de pare-chocs en matière plastique selon la revendication indépendante 2.

Le procédé selon l'invention est remarquable en ce que, contrairement à toute attente, la feuille de renfort n'empêche pas le fluage de la matière thermoplastique dans les cavités secondaires du moule.

Jusqu'à présent, étant donné que la feuille de renfort était connue pour ne pas être capable d'épouser des formes complexes du moule, on a toujours déposé la feuille de renfort contre une paroi de la cavité principale présentant peu- de relief. La matière thermoplastique venait alors se lier intimement avec les fibres préimprégnées de la feuille de renfort, sans traverser cette dernière.

Or, lors d'un essai de moulage d'une telle feuille de renfort pour un nouveau produit, les inventeurs à la base de la présente invention ont utilisé, sans le vouloir, un moule muni de cavités secondaires et ont placé la feuille de renfort sur l'embouchure de ces cavités secondaires.

Lors du démoulage de la pièce, ils ont pu constater que la matière thermoplastique avait traversé la feuille de renfort, ce qui est surprenant compte tenu de la relativement faible pression à laquelle la matière thermoplastique est soumise lors de la compression par fermeture du moule.

En effet, alors que, par injection classique dans un moule fermé, on soumet la matière thermoplastique à une pression comprise entre 200 et 250 bars, par compression, la matière thermoplastique ne subit qu'une pression comprise entre environ 100 et 150 bars.

Des essais de tenue mécanique ont révélé que la pièce ne présentait aucune fragilité particulière au voisinage des zones de la feuille de renfort traversées par la matière thermoplastique, ce qui semble indiquer que cette feuille a laissé passer la matière thermoplastique sans trop se déchirer, ou en tout cas d'une manière telle que les éventuelles dégradations locales de la feuille de renfort ne sont pas préjudiciables aux qualités mécaniques de la pièce.

A postériori, il semble que l'action uniforme des deux parties du moule serrées l'une contre l'autre sur la matière thermoplastique permet de répartir uniformément la pression sur toute la surface de contact entre la feuille de renfort et la masse de matière thermoplastique, ce qui favorise la traversée sans dégradation de la feuille de renfort.

Conformément à l'invention, le fait de pouvoir réaliser des nervures sur la face de la pièce occupée par la feuille de renfort permet de combiner, dans une même pièce, les deux facteurs déterminants pour obtenir une bonne rigidité de cette pièce que sont, d'une part, la présence de la feuille de renfort et d'autre part, la présence de nervures sur la face de la pièce occupée par la feuille de renfort.

Dans un mode de réalisation particulier de l'invention, on peut profiter de la présence des nervures pour réduire l'épaisseur de la feuille de renfort ou le nombre de feuilles de renfort dans le cas où plusieurs feuilles de renfort sont superposées dans une même pièce.

A titre d'exemple de feuille de renfort utilisable selon l'invention, on peut citer le préimprégné thermoplastique "TWINTEX" de la Société VETROTEX et le produit "TEPEX" de la Société DUPONT de NEMOURS.

La présente invention a également pour objet une poutre de pare-chocs constituée par une couche de matière thermoplastique seule sur une de ses faces et par une couche de matière thermoplastique renforcée par une feuille de renfort sur son autre face, et qui comporte, en saillie de cette autre face, des nervures de rigidification.

Dans un mode de réalisation particulier de l'invention, la poutre de pare-chocs comporte en outre des éléments d'accrochage aux longerons d'un véhicule automobile, en saillie de la face de la poutre opposée au bouclier.

Dans une variante préférée de ce mode de réalisation, un ou chaque élément d'accrochage est constitué par une enceinte de confinement de forme cylindrique ou prismatique de sorte que ladite enceinte de confinement peut présenter une section transversale circulaire ou rectangulaire, ladite enceinte de confinement étant ouverte du côté de la poutre dirigé vers les longerons du véhicule, un organe absorbeur de chocs étant librement engagé dans cette enceinte de confinement pour prendre appui d'une part sur les longerons (ou sur un élément intermédiaire de liaison avec ceux-ci) d'autre part sur la paroi de la poutre située au fond de l'enceinte de confinement.

Dans cette variante, la poutre de pare-chocs reproduit les caractéristiques fonctionnelles d'une poutre en aluminium montée sur des vérins fixés aux longerons d'un véhicule.

La présente invention a également pour objet un pare-choc de véhicule automobile muni d'une poutre telle que décrite ci-dessus.

Dans le but de mieux faire comprendre l'invention, on va en décrire maintenant des modes de réalisation donnés à titre d'exemples non limitatifs en référence au dessin annexé dans lequel :
- la figure 1 est une vue en coupe d'un moule pour mettre en oeuvre le procédé selon l'invention,
- la figure 1A est une vue selon 1A-1A de la figure 1,
- la figure 2 est une vue analogue à la figure 1 après dépôt d'une feuille de renfort dans le moule,
- la figure 3 est une vue analogue à la figure 2 après dépôt d'une quantité de matière thermoplastique dans le moule,
- la figure 4 est une vue analogue à la figure 3 après fermeture partielle du moule,
- la figure 5 est une vue analogue à la figure 4 après fermeture totale du moule,
- la figure 6 est une vue analogue à la figure 5 après ouverture du moule et démoulage de la poutre,
- la figure 6A est une vue selon 6A-6A de la figure 5,
- la figure 7 est une vue en coupe de la poutre de la figure 6 dans son utilisation sur un véhicule automobile, et
- les figures 8 et 9 sont des vues en perspective d'absorbeurs de chocs utilisables dans la poutre de la figure 7.

Le moule représenté sur le dessin comprend une partie supérieure 1 et une partie inférieure 2, entre lesquelles est définie une cavité principale destinée à mouler une poutre de pare-chocs cintrée.

Ces deux parties sont aptes, par déplacement selon un axe X-X', à s'imbriquer l'une dans l'autre suivant un plan de joint positif, c'est-à-dire sans que leur rapprochement l'une vers l'autre ne soit limité par une quelconque butée, ce rôle étant rempli par la matière fondue introduite dans le moule pour la réalisation de la poutre.

Dans un but de clarté, on n'a pas représenté, dans la partie supérieure 1, les différentes cavités secondaires qui, à la manière connue, permettent de mouler simultanément à la poutre des supports permettant la fixation de la poutre à un bouclier.

La partie inférieure 2 du moule comprend des cavités secondaires qui s'étendent toutes parallèlement à l'axe d'ouverture et de fermeture du moule X-X', à savoir une rainure longitudinale 2 et des rainures transversales 4 qui définissent des nervures sur la face correspondante de la poutre.

La partie inférieure 2 du moule comporte également deux cavités 5 situées symétriquement par rapport au plan médian du moule perpendiculaire au dessin, aux endroits de la poutre correspondant aux longerons du véhicule.

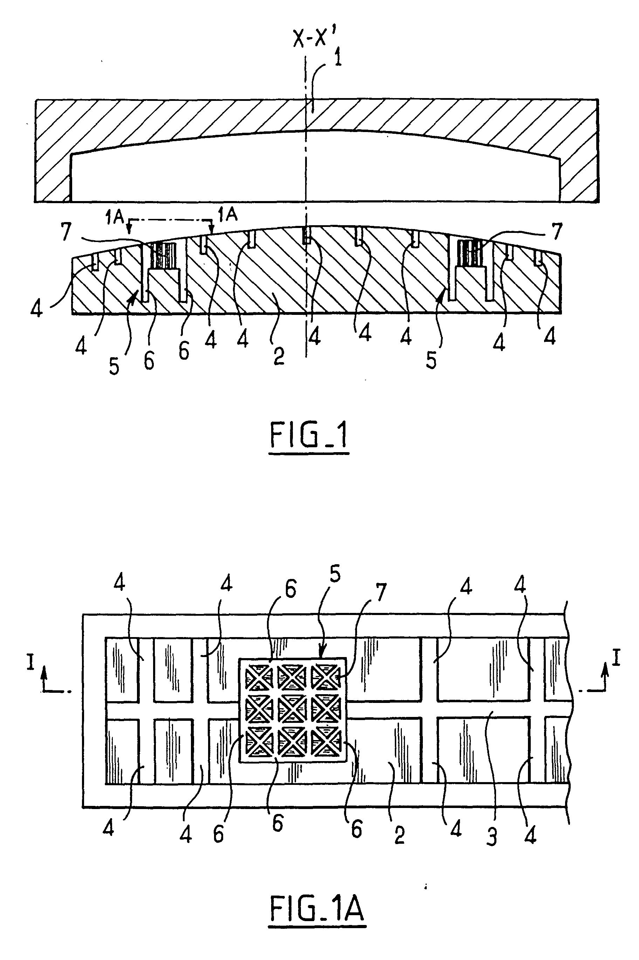

Ces cavités 5 sont constituées chacune par quatre empreintes de paroi 6 parallèles à l'axe X-X' du moule et disposées en section suivant un carré, comme on le voit à la figure 1A.

Jusqu'à environ la moitié de leur profondeur, lesdites empreintes entourent un ensemble de poinçons 7 qui sont parallèles à l'axe X-X' du moule et présentent chacun une section triangulaire. L'agencement des poinçons 7 est tel qu'ils définissent entre eux l'empreinte d'un réseau cloisonné.

Conformément à l'invention, on commence par chauffer une feuille de renfort 8 que l'on dépose, dans le moule ouvert, sur sa partie inférieure 2. La feuille de renfort 8 recouvre ainsi les cavités secondaires 3,4 et 5.

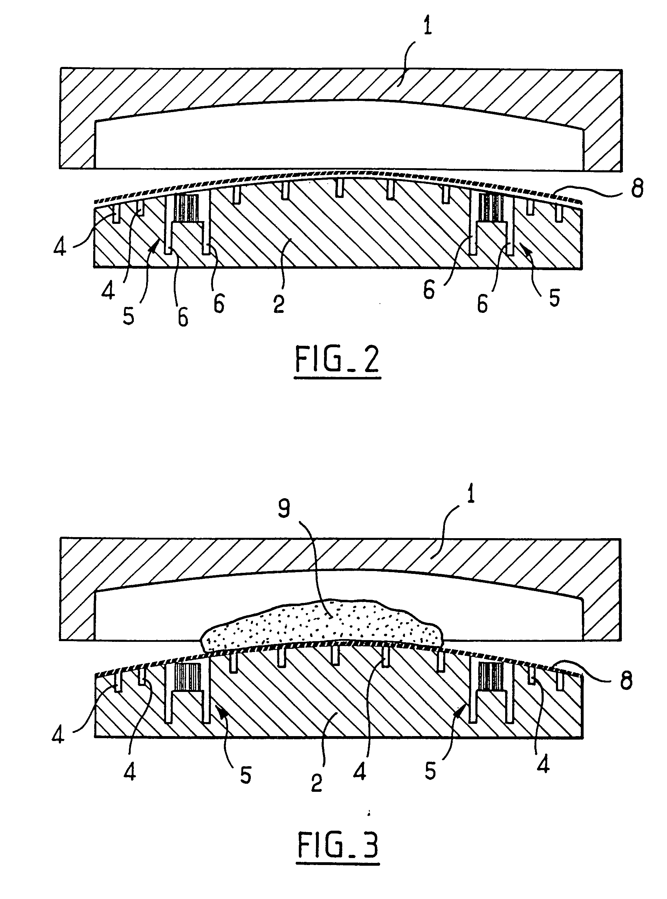

On dépose ensuite, comme on le voit à la figure 3, une masse de matière thermoplastique, de préférence chargée de fibres, sensiblement dans la partie centrale de la partie inférieure 2 du moule.

On referme ensuite progressivement le moule.

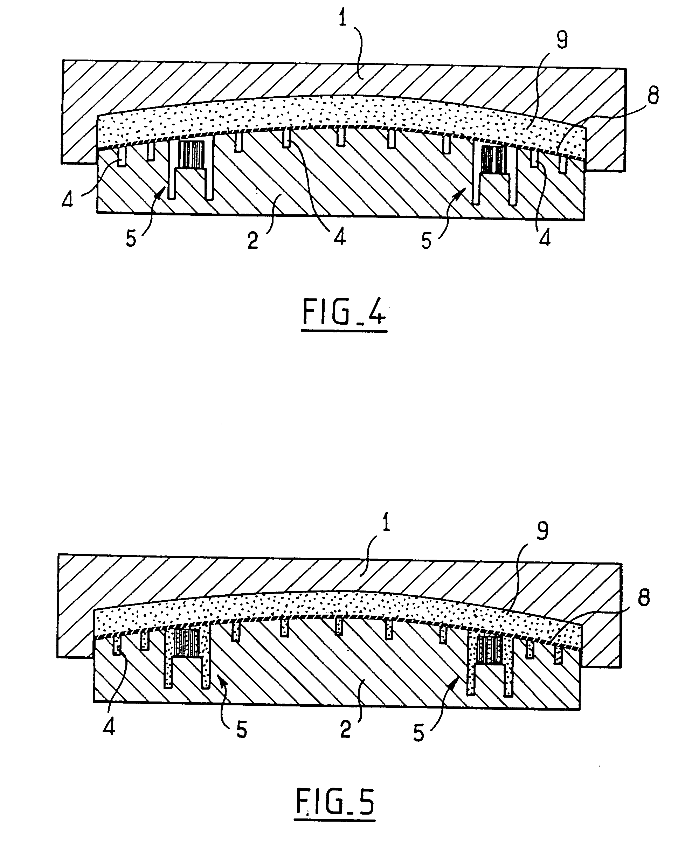

Lors de cette fermeture, la matière thermoplastique 9 subit une pression d'environ 100 bars et flue d'abord dans la cavité principale du moule, comme on le voit à la figure 4.

A ce stade, la matière thermoplastique 9 n'a pas pénétré dans les cavités 3, 4 et 5.

On poursuit alors la fermeture du moule, ce qui provoque, au droit des nervures 3, 4 et des empreintes 5, le passage de la matière thermoplastique 9 au travers de la feuille de renfort 8.

On constate alors que la feuille de renfort 8 ne se déchire pas lors du passage de la matière thermoplastique.

On aboutit alors au remplissage intégral du moule, comme représenté à la figure 5.

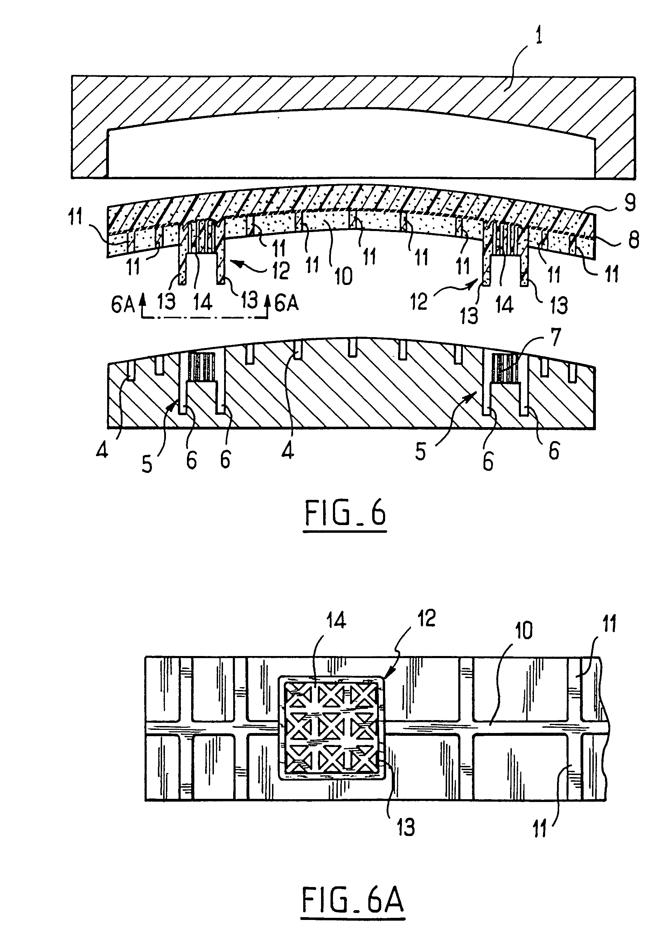

Il ne reste plus qu'à démouler la poutre ainsi obtenue après avoir ouvert le moule, comme illustré à la figure 6.

La figure 6A montre la structure de la poutre vue selon les flèches 6A.

La poutre comporte une nervure longitudinale 10 et une pluralité de nervures transversales 11 ainsi que deux enceintes de confinement de section carrée formées par des parois 13 moulées dans les empreintes 6.

L'enceinte de confinement est fermée du côté de la poutre par les extrémités d'un réseau de cloisons 14 et ouverte sur sa face opposée à la poutre.

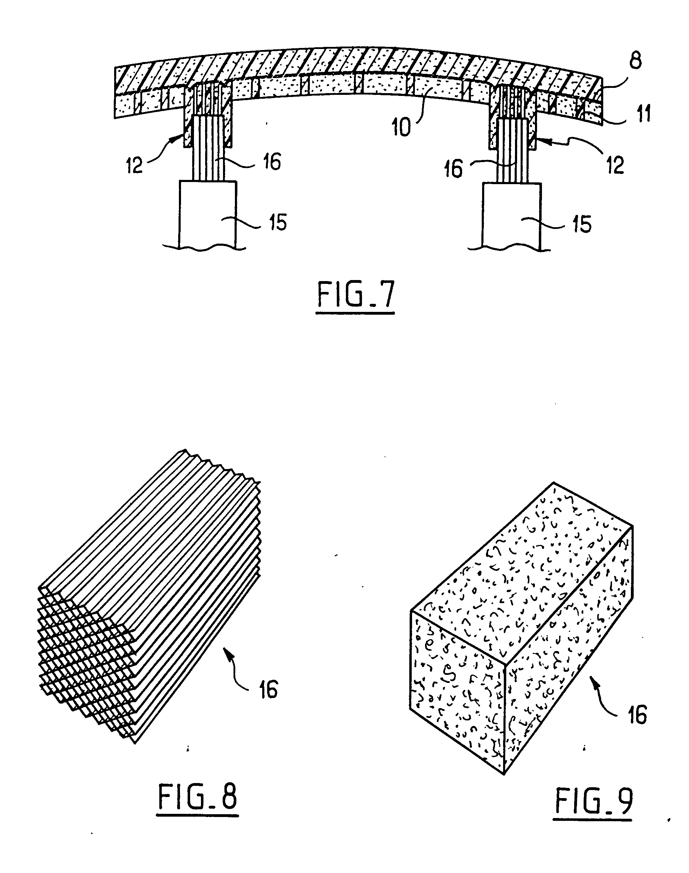

Dans son utilisation illustrée par la figure 7, la poutre s'appuie contre deux longerons 15 d'un véhicule (non représenté), par l'intermédiaire de deux absorbeurs de chocs 16, de section très légèrement inférieure à celle des enceintes de confinement 12, engagés dans ces dernières en dépassant par leur face ouverte.

Les absorbeurs de chocs utilisables à cet effet sont, par exemple, une structure parallélépipédique en nid d'abeilles réalisée en polycarbonate tel que représentée à la figure 8 ou un bloc de PPE, comme illustré à la figure 9.

Du fait que les absorbeurs de chocs 16 sont maintenus dans les enceintes de confinement 12 de manière telle qu'ils ne travaillent qu'en compression axiale en cas de choc frontal, ils peuvent remplir pleinement leur fonction.

Afin de renforcer la structure de la poutre, on peut aussi prévoir une traverse métallique entre les deux enceintes de confinement de manière à éviter leur écartement lors d'un choc, ce choc entraînant la déformation de la poutre.

D'autres modifications du mode de réalisation qui vient d'être décrit peuvent y être apportées sans pour cela sortir du cadre de l'invention défini par les revendications.

## Revendications

1. Procédé pour réaliser une pièce en matière thermoplastique renforcée par une feuille de renfort apparaissant sur l'une des faces de ladite pièce, consistant à :
- utiliser un moule (1,2) comprenant une cavité principale qui définit la forme générale de la pièce et des cavités secondaires (3,4,5) débouchant dans une paroi de la cavité principale et définissant des excroissances (10,11,12) en saillie d'une des faces de la pièce,
- déposer dans le moule ouvert une feuille de renfort (8) constituée par un tissé ou un non tissé de fibres de renfort mélangées à de la matière thermoplastique, contre ladite paroi de la cavité principale, la feuille de renfort obturant ainsi l'embouchure des cavités secondaires,
- introduire dans le moule ouvert une matière thermoplastique (9) éventuellement chargée de fibres dans la cavité principale du moule, du côté de la feuille de renfort opposé aux cavités secondaires, en quantité suffisante pour remplir la cavité principale et les cavités secondaires,
- fermer progressivement le moule pour provoquer le fluage de la matière thermoplastique et le remplissage de la cavité principale et des cavités secondaires,
- démouler la pièce.

2. Procédé pour réaliser une poutre de pare-chocs en matière plastique, renforcée par une feuille de renfort apparaissant sur sa face destinée à être dirigée vers l'intérieur du véhicule, consistant à :
- utiliser un moule (1,2) comprenant une cavité principale qui définit la forme générale de la poutre et des cavités secondaires (3,4,5) débouchant dans une paroi de la cavité principale et définissant des excroissances (10,11,12) en saillie de la face de la poutre destinée à être dirigée vers l'intérieur du véhicule,
- déposer dans le moule ouvert une feuille de renfort (8) constituée par un tissé ou un non tissé de fibres de renfort mélangées à de la matière thermoplastique, contre ladite paroi de la cavité principale, la feuille de renfort obturant ainsi l'embouchure des cavités secondaires,
- introduire dans le moule ouvert une matière thermoplastique (9) éventuellement chargée de fibres dans la cavité principale du moule, du côté de la feuille de renfort opposé aux cavités secondaires, en quantité suffisante pour remplir la cavité principale et les cavités secondaires,
- fermer progressivement le moule pour provoquer le fluage de la matière thermoplastique et le remplissage de la cavité principale et des cavités secondaires,
- démouler la poutre.

3. Procédé pour réaliser un pare-chocs de véhicule automobile, consistant à réaliser une poutre de pare-chocs par mise en oeuvre du procédé selon la revendication 2 et à intégrer cette poutre dans un bouclier de pare-chocs.

4. Poutre de pare-chocs de véhicule automobile constituée par une couche de matière thermoplastique seule (9) sur une de ses faces et par une couche de matière thermoplastique renforcée par une feuille de renfort (8) sur son autre face, et qu'elle comporte, en saillie de cette autre face, des nervures de rigidification.

5. Poutre de pare-chocs selon la revendication 4, caractérisée par le fait qu'elle comporte des éléments d'accrochage (12) aux longerons (15) d'un véhicule automobile, en saillie de sa face comportant la feuille de renfort.

6. Poutre de pare-chocs selon la revendication 5, caractérisée par le fait qu'un ou chaque élément d'accrochage (12) est constitué par une enceinte de confinement de forme cylindrique ou prismatique, ouverte du côté de la poutre dirigé vers les longerons (15) du véhicule, un organe absorbeur de chocs (16) étant librement engagé dans cette enceinte de confinement pour prendre appui d'une part sur les longerons (ou un élément intermédiaire de liaison avec ceux-ci), d'autre part sur la paroi de la poutre située au fond de l'enceinte de confinement.

7. Pare-chocs de véhicule automobile muni d'une poutre selon l'une quelconque des revendications 4 à 6.

## Patentansprüche

1. Verfahren zur Herstellung eines Gegenstandes aus thermoplastischem Kunststoff, der durch eine verstärkende Lage armiert ist, die an einer der Flächen des Gegenstandes sichtbar ist, bestehend aus
- Verwenden einer Form (1, 2), die einen Haupthohlraum hat, der die allgemeine Form des Gegenstandes definiert, und die Nebenhohlräume (3, 4, 5) hat, die in eine Wand des Haupthohlraumes einmünden und Ausstülpungen (10, 11, 12) definieren, die an einer der Flächen des Gegenstandes vorspringen,
- Einlegen in die geöffnete Form einer Verstärkungslage (8), die aus einem gewebten oder nicht gewebten Material aus Verstärkungsfasern besteht, die mit dem thermoplastischen Kunststoff gemischt sind, an der genannten Wand des Haupthohlraumes, die verstärkende Lage überdeckt dabei die Öffnungen der Nebenhohlräume,
- Eingabe eines thermoplastischen Kunststoffs (9), der gegebenenfalls mit Fasern beladen ist, in die geöffnete Form in den Haupthohlraum an der Seite der verstärkenden Lage und gegenüberliegend den Nebenhohlräumen in einer ausreichenden Menge, um den Haupthohlraum und die Nebenhohlräume zu füllen,
- progressives Schliessen der Form, um das plastische Fliessen des thermoplastischen Kunststoffs und das Ausfüllen des Haupthohlraumes und der Nebenhohlräume zu bewirken,
- Entformen des Gegenstandes.

2. Verfahren zum Herstellen eines Stossfängerträgers aus Kunststoff, der durch eine verstärkende Lage armiert ist, die an seiner Fläche sichtbar ist, welche bestimmt ist, zum Inneren des Fahrzeuges hin gerichtet zu werden, bestehend aus
- Verwenden einer Form (1, 2), die einen Haupthohlraum hat, der die allgemeine Form des Trägers definiert, und die Nebenhohlräume (3, 4, 5) hat, die in eine Wand des Haupthohlraumes einmünden und Ausstülpungen (10, 11, 12) definieren, die an einer der Flächen des Trägers vorspringen, Einlegen in die geöffnete Form einer Verstärkungslage (8), die aus einem gewebten oder nicht gewebten Material aus Verstärkungsfasern besteht, die mit dem thermoplastischen Kunststoff gemischt sind, an der genannten Wand des Haupthohlraumes, die verstärkende Lage überdeckt dabei die Öffnungen der Nebenhohlräume,
- Eingabe eines thermoplastischen Kunststoffs (9), der gegebenenfalls mit Fasern beladen ist, in die geöffnete Form in den Haupthohlraum an der Seite der verstärkenden Lage und gegenüberliegend den Nebenhohlräumen in einer ausreichenden Menge, um den Haupthohlraum und die Nebenhohlräume zu füllen,
- progressives Schliessen der Form, um das plastische Fliessen des thermoplastischen Kunststoffs und das Ausfüllen des Haupthohlraumes und der Nebenhohlräume zu bewirken,
- Entformen des Trägers.

3. Verfahren zur Herstellung von Stossfängern eines Kraftfahrzeuges, das darin besteht, dass ein Stossfängerträger durch Anwenden des Verfahrens nach Anspruch 2 hergestellt und dieser Träger in einen Schild des Stossfängers integriert wird.

4. Stossfängerträger eines Kraftfahrzeuges, der auf einer seiner Flächen aus einer Schicht aus nur einem thermoplastischen Kunststoff (9) gebildet ist und auf seiner anderen Fläche aus einer Schicht aus thermoplastischem Kunststoff gebildet ist, der durch eine verstärkende Lage (8) armiert ist, und der versteifende Rippen aufweist, die an dieser anderen Fläche vorspringen.

5. Stossfängerträger nach Anspruch 4, dadurch gekennzeichnet, dass er Verankerungselemente (12) in Längsträgern (15) des Kraftfahrzeuges aufweist, die von seiner Fläche, welche die verstärkte Lage aufweist, vorspringen.

6. Stossfängerträger nach Anspruch 5, dadurch gekennzeichnet, dass das eine oder mehrere Verankerungsmittel (12) gebildet ist von einer Sicherheitseinfassung mit zylindrischer oder prismatischer Form, die offen ist zu der Seite des Trägers, der zu den Längsträgern (15) des Kraftfahrzeuges gerichtet ist, ein Schockabsorber (16) ist frei im Eingriff mit dieser Sicherheitseinfassung, um einerseits in Anlage zu kommen an den Längsträgern (oder einem zwischengeordneten Verbindungselement mit diesen) und andererseits an der Wand des Trägers, die sich am Boden der Sicherheitseinfassung befindet.

7. Stossfänger für Kraftfahrzeuge, ausgestattet mit einem Stossfängerträger nach einem beliebigen der Patentansprüche 4 bis 6.

## Claims

1. Process for producing a part made of a thermoplastic reinforced by a reinforcing sheet appearing on one of the faces of the said part, consisting in:
- using a mould (1, 2) comprising a main cavity which defines the overall shape of the part and secondary cavities (3, 4, 5) terminating in a wall of the main cavity and defining excrescences (10, 11, 12) projecting from one of the faces of the part;
- placing a reinforcing sheet (8), consisting of a woven or non-woven fabric of reinforcing fibres mixed with thermoplastic material, in the open mould against the said wall of the main cavity, the reinforcing sheet thus closing off the openings of the secondary cavities;
- introducing a thermoplastic (9) possibly filled with fibres into the open mould, in the main cavity of the mould, on the opposite side of the reinforcing sheet from the secondary cavities, in an amount sufficient to fill the main cavity and the secondary cavities;
- gradually closing the mould in order to make the thermoplastic flow and fill the main cavity and the secondary cavities;
- demoulding the part.

2. Process for producing a plastic bumper beam reinforced by a reinforcing sheet appearing on its face intended to be directed towards the inside of the vehicle, consisting in :
- using a mould (1, 2) comprising a main cavity which defines the overall shape of the beam and secondary cavities (3, 4, 5) terminating in a wall of the main cavity and defining excrescences (10, 11, 12) projecting from that face of the beam which is intended to be directed towards the inside of the vehicle;
- placing a reinforcing sheet (8), consisting of a woven or non-woven fabric of reinforcing fibres mixed with thermoplastic material, in the open mould against the said wall of the main cavity, the reinforcing sheet thus closing off the openings of the secondary cavities;
- introducing a thermoplastic (9) possibly filled with fibres into the open mould, in the main cavity of the mould, on the opposite side of the reinforcing sheet from the secondary cavities, in an amount sufficient to fill the main cavity and the secondary cavities;
- gradually closing the mould in order to make the thermoplastic flow and fill the main cavity and the secondary cavities;
- demoulding the beam.

3. Process for producing a motor-vehicle bumper, consisting in producing a bumper beam by implementing the process according to Claim 2 and in incorporating this beam in a bumper shield.

4. Motor-vehicle bumper beam formed, on one of its faces, by a layer of thermoplastic material (9) alone and, on its other face, by a layer of thermoplastic material reinforced by a reinforcing sheet (8), and that it includes, projecting from this other face, stiffening ribs.

5. Bumper beam according to Claim 4, characterized in that it includes fastening elements (12) that fasten to the rails (15) of a motor vehicle and that project from its face including the reinforcing sheet.

6. Bumper beam according to Claim 5, characterized in that one or each fastening element (12) consists of a containment enclosure of cylindrical or prismatic shape, open on that side of the beam which is directed towards the rails (15) of the vehicle, a shock-absorbing member (16) being freely engaged in this containment enclosure so as to bear, on one side, on the rails (or an intermediate element linking therewith) and, on the other side, on that wall of the beam which is located at the bottom of the containment enclosure.

7. Motor-vehicle bumper fitted with a beam according to any one of Claims 4 to 6.
